(19) Europäisches Patentamt
European Patent Office
Office européen des brevets

(11) **EP 4 100 341 B1**

(12) **EUROPÄISCHE PATENTSCHRIFT**

(45) Veröffentlichungstag und Bekanntmachung des Hinweises auf die Patenterteilung:
**17.04.2024 Patentblatt 2024/16**

(21) Anmeldenummer: **21701135.2**

(22) Anmeldetag: **25.01.2021**

(51) Internationale Patentklassifikation (IPC):
**B65G 1/04** *(2006.01)* **B65G 1/137** *(2006.01)*

(52) Gemeinsame Patentklassifikation (CPC):
**B65G 1/0478; B65G 1/1371;** B65G 2203/0208; B65G 2203/0233; B65G 2207/40

(86) Internationale Anmeldenummer:
**PCT/EP2021/051556**

(87) Internationale Veröffentlichungsnummer:
**WO 2021/156082 (12.08.2021 Gazette 2021/32)**

(54) **VERFAHREN UND EINRICHTUNG ZUM AUTOMATISIERTEN BETRIEB EINER ANLAGE ZUR LAGERUNG VON SCHÜTTGUT**

METHOD AND DEVICE FOR AUTOMATED OPERATION OF A PLANT FOR STORING BULK MATERIAL

PROCÉDÉ ET DISPOSITIF POUR LE FONCTIONNEMENT AUTOMATISÉ D'UNE INSTALLATION DE STOCKAGE DE PRODUITS EN VRAC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.02.2020 DE 102020201316**
**04.02.2020 BE 202005066**

(43) Veröffentlichungstag der Anmeldung:
**14.12.2022 Patentblatt 2022/50**

(73) Patentinhaber: **Koch Solutions GmbH**
**66787 Wadgassen (DE)**

(72) Erfinder: **ESSER, Philipp**
**50672 Köln (DE)**

(74) Vertreter: **Patentanwälte Bernhardt / Wolff Partnerschaft mbB**
**Europaallee 17**
**66113 Saarbrücken (DE)**

(56) Entgegenhaltungen:
CN-B- 104 634 815 DE-A1-102015 104 229
JP-A- 2017 138 166

- Peuker Urs: "Analyse und Strategien zum Verringern von Anbackungen bei der Lagerung von Mehrstoffsystemen insbesondere Glasgemenge im Rohstoffsilo", , 12. Dezember 2016 (2016-12-12), Seiten 1-116, XP055793396, Gefunden im Internet: URL:https://tu-freiberg.de/sites/default/files/media/mvtat-12348/pdf/Abschlussberichte/aif_igf-479-zbr_anbackungen.pdf [gefunden am 2021-04-08]

EP 4 100 341 B1

**Beschreibung**

Die Erfindung betrifft ein Verfahren zum Betreiben einer Anlage zur Lagerung von Schüttgut, zum Beispiel einer Anlage zum Materialumschlag von Schüttgut oder einer im Tagebau eingesetzten Materialgewinnungsanlage mit einem Lagerungsbetrieb von in der Materialgewinnungsanlage abgebautem Abraum beziehungsweise Schüttgut, gemäß dem Oberbegriff des Anspruchs 1.

Gegenstand der vorliegenden Erfindung ist auch eine Einrichtung, mittels derer das erfindungsgemäße Verfahren durchführbar ist.

Bei der Lagerplatzhaltung an einem Materialumschlagplatz für Schüttgut, zum Beispiel eines Materialumschlagplatzes eines Schiffshafens oder einer Materialabbaustätte, werden die Materialien in sogenannten Halden zwischengelagert. Diese Halden bestehen aus Aufschüttungen von zum Beispiel Erz, Braunkohle, Rohmaterial für die Zementherstellung oder von Salzen wie zum Beispiel Kalisalz (Kaliumkarbonat) oder dergleichen. Bei der Lagerplatzhaltung beziehungsweise Lagerung von Schüttgut werden lagerungsbedingte, physikalische Einflüsse auf das jeweils gelagerte Material oft unzureichend oder sogar überhaupt nicht berücksichtigt.

Aus WO 2009/075945 A1 geht ein Verfahren zur Simulation eines Materialreservoirs, zum Beispiel einer Öl- oder Gas-Lagerstätte zur Öl- oder Gasproduktion, hervor. Dabei wird ein Reservoir-Modell erzeugt, wobei das erzeugte Modell in verschiedene Domänen partitioniert wird, von denen jede Domäne einer effizienten Partition für einen bestimmten Teil des Modells entspricht. Bei dem Verfahren wird die Simulation des Reservoirs in mehrere Verarbeitungselemente aufgeteilt und eine Vielzahl von Verarbeitungselementen auf der Grundlage der Partitionen parallel verarbeitet. Bei dem dreidimensionalen Reservoir-Modell wird zum Beispiel der Betrieb eines Öl- und/oder Gasreservoirs mit einem oder mehreren vertikalen Bohrlöchern simuliert. Das Modell wird durch ein Gitternetz in mehrere Knoten aufgeteilt, wobei die Knoten des Modells verschiedene Größen aufweisen können.

Aus der JP 2017 138166 A ist ein Überwachungssystem für eine Kohlehalde, wobei verschiedene Kohlearten gruppiert gelagert werden.

Aus der CN 104 634 815 B ist ein Verfahren zur Simulation der Selbstentzündung einer Kohlehalde bekannt.

Aus der DE 10 2015 104229 A1 ist ein System und ein Verfahren zum Betrieb einer Halde mit einem dreidimensionalen Haldenmodell bekannt.

Aus der Peuker Urs: "Analyse und Strategien zum Verringern von Anbackungen bei der Lagerung von Mehrstoffsystemen insbesondere Glasgemenge in Rohstoffsilo", 12.12.2016, Seite 1-116, ist ein Abschlussbericht eines Projektes zur Analyse und zur Entwicklung von Strategien zum Verringern von Anbackungen bei der Lagerung von Mehrstoffsystemen, insbesondere von Glasgemenge, in Rohstoffsilos bekannt.

Der Erfindung liegt der Gedanke zugrunde, bei einer hier betroffenen Anlage zur Lagerung von Schüttgut, zum Beispiel einer Anlage zum Materialumschlag von Schüttgut (sog. "Materialumschlagplatz" zum Umschlag von Schüttgut bei einer im Tagebau betriebenen Materialgewinnungsanlage, den Lagerungsbetrieb von dort gelagertem Material auf der Berechnungsgrundlage eines rechnergestützten Lagerplatzmodells beziehungsweise Haldenmodells materialschonend, und dabei auch möglichst automatisiert, zu steuern.

Es ist gerade nicht materialschonend, wenn das Schüttgut während der Lagerung durch Verhärtungen oder Anbackungen vor dem erneuten Entnehmen wieder aufgebrochen werden muss.

Es ist dabei hervorzuheben, dass die Erfindung auch bei sogenannten "Mischbett"-Anlagen zur Anwendung kommen kann, in denen verschiedene Materialien und/oder verschiedene Materialqualitäten eines Materials und/oder Materialien mit verschiedenen Materialzuständen in einem Mischbett (zwischen-)gelagert werden, um diese miteinander zu vermischen. In einem solchen Anwendungsszenario kann das digitale Haldenmodell, zusätzlich zum Materialzustand, auch beschreiben, welches Material beziehungsweise welche Materialqualität an einer bestimmten Stelle in der Halde vorliegt. Dadurch ist es möglich, auch den genauen Mischungsgrad von auszulagerndem Material nach erfolgter Vermischung vorherzusagen.

Der Erfindung liegt die Erkenntnis zugrunde, dass es bei der Lagerplatzhaltung bei einem Materialumschlagplatz für Schüttgut, zum Beispiel einem an einem Schiffshafen oder einer Materialabbaustätte angeordneten Lagerplatz zum Umschlag vom Materialien, unter bestimmten physikalischen Einflussfaktoren verstärkt zu einer oberflächlichen Verhärtung und/oder Anbackung des gelagerten Materials kommen kann. Solche Einflussfaktoren sind zum Beispiel der lagerungsbedingte mechanische Druck auf das Material, die durch äußere und/oder innere Einflüsse bedingte Materialtemperatur, die durch äußere und/oder innere Einflüsse bedingte Luftfeuchte beziehungsweise Materialfeuchte und/oder die Lagerungszeit. Genannte lagerungsbedingte Materialveränderungen können zum Beispiel bei Materialien beziehungsweise Rohstoffen wie zum Beispiel Eisenerz, Braunkohle, Rohmaterial für die Zementherstellung, zum Beispiel Kalkstein, Kalkstein/Mergel/Ton-Gemische, Gips oder Ton, sowie Kaliumkarbonat, granularem Schwefel, Düngemittel, oder dergleichen, auftreten. Zusätzlich zur Materialfeuchte können weitere, für eine Verhärtung und/oder Anbackung des Materials relevante, materialabhängige physikalische beziehungsweise chemische Einflussgrößen berücksichtigt werden, zum Beispiel der Kalkgehalt im Falle von Kalkstein.

Gemäß einem ersten Aspekt des erfindungsgemäß vorgeschlagenen Verfahrens wird für einen jeweiligen Lagerbereich, beziehungsweise eine entsprechende Halde, ein digitales Haldenmodell erstellt. Auf der Grundlage dieses Modells wird die Wahrscheinlichkeit für die Entstehung von im Vorfeld empirisch, zum Beispiel durch Vorversuche oder Simulationsrechnungen, bestimmten physikalischen Zuständen, welche bei der Lagerung des jeweils eingelagerten Materials auftreten können, berechnet. Diese Zustände werden dann als Prozessgrößen bei der Automation des Lagerungsbetriebs herangezogen, um die genannten, unerwünschten physikalischen Lagerungszustände durch einen geeigneten Lagerungsbetrieb beziehungsweise entsprechende Gegenmaßnahmen wirksam zu vermeiden.

Es ist hierbei anzumerken, dass ein genannter Lagerbereich in der einschlägigen Literatur als eine an einem Lagerplatz (engl. stockyard") angeordnete Halde (engl. "stockpile") bezeichnet wird, welche einen Lagerort für hier betroffenes Schüttgut darstellt. Eine solche Halde wird zum Beispiel bei einer hier betroffenen Materialgewinnungsanlage vorwiegend durch Gurtfördergeräte erzeugt beziehungsweise gespeist.

Erfindungsgemäß wird eine hier betroffene Halde in eine Vielzahl von kleineren Volumenelementen zerlegt. Bei diesen Volumenelementen handelt es sich bevorzugt um in den drei Raumrichtungen symmetrische Elemente, zum Beispiel würfelförmige Volumenelemente, wodurch die Berechnung der auf ein einzelnes Volumenelement einwirkenden physikalischen Kräfte, beziehungsweise die Berechnung des entsprechenden physikalischen Zustandes eines solchen Volumenelements, erheblich vereinfacht wird. Bei der Berechnung eines aktuellen Haldenmodells werden jeweils für ein vorgegebenes Volumenelement die Einflüsse von darüber und seitlich angeordneten Nachbarelementen berücksichtigt. Dabei kann die zu berücksichtigende Anzahl nächster Nachbarelemente ggf. vergrößert werden, um die Genauigkeit der Modellrechnung zu verbessern. Bei Testberechnungen hat sich ergeben, dass die Berücksichtigung von horizontal nur nächsten Nachbarn und von vertikal möglichst sämtlichen, oberhalb des betrachteten Volumenelementes angeordneten Volumenelementen ausreichend präzise Ergebnisse liefert.

Gemäß einem weiteren Aspekt des vorgeschlagenen Verfahrens werden bei der Berechnung genannter Volumenelemente der lokal beziehungsweise im Mittel vorherrschende, bevorzugt isostatische Druck sowie die im jeweiligen Volumenelement im Mittel vorliegende Temperatur berücksichtigt, um aus diesen Größen zu berechnen, wie wahrscheinlich eine Verhärtung des Materials des jeweils betrachteten Volumenelements und/oder eine Anbackung des Materials dieses Elements mit dem Material eines der Nachbarelemente ist. Dabei werden bevorzugt im Vorfeld empirisch ermittelte Daten für das Verhärtungs- und/oder Anbackungsverhalten verschiedener Materialien zugrunde gelegt. Die so im Vorfeld ermittelten Daten umfassen zum Beispiel die Verhärtungs- beziehungsweise Anbackungswahrscheinlichkeit (in %) in Abhängigkeit von dem an der Grenzfläche zwischen zwei Volumenelementen vorliegenden Druck und der Temperatur, und zwar in Abhängigkeit von dem jeweiligen Material.

Gemäß einem weiteren Aspekt des vorgeschlagenen Verfahrens wird bei der Berechnung genannter Volumenelemente des Haldenmodells zusätzlich die bereits abgelaufene Lagerungszeit des jeweiligen Materials berücksichtigt. Dadurch können zeitabhängige Effekte bei dem Verhärtungs- und/oder Anbackungsverhalten des jeweiligen Materials präziser berücksichtigt werden.

Gemäß einem weiteren Aspekt des vorgeschlagenen Verfahrens werden die für die Berechnung des Haldenmodells erforderlichen räumlichen Daten einer aktuell vorliegenden Materialaufschüttung mit sensorisch erfassten, topografischen Oberflächendaten zusammengeführt beziehungsweise verglichen und anhand des Vergleichs ggf. eine Anpassung des Haldenmodells an die aktuelle Materialaufschüttung vorgenommen. Die sensorische Erfassung solcher Oberflächendaten kann dabei berührungslos mittels üblicher Kamerasysteme oder lasertechnisch, radartechnisch, optisch, oder auch mittels autonom agierender Flug- oder Fahrdrohnen, erfolgen. Die für die Berechnung des Haldenmodells ebenfalls erforderlichen physikalischen Daten, wie zum Beispiel aktuelle Temperaturen an den Oberflächen beziehungsweise in den Außenbereichen einer Materialaufschüttung, können ebenfalls bevorzugt berührungslos sensorisch erfasst werden, zum Beispiel mittels an sich bekannter Infrarotthermometer (sog. Pyrometer) oder mittels an sich bekannter Wärmebildkameras.

Gemäß einem noch weiteren Aspekt des vorgeschlagenen Verfahrens können die Ergebnisse der Berechnung eines aktuell gültigen Haldenmodells, zum Beispiel im Falle einer Lagerplatzhaltung mit einer Maschinensteuerung zum Betrieb entsprechender Transport- beziehungsweise Fördertechnik (zum Beispiel Bandabsetzer) für Schüttgut, einer speicherprogrammierbaren (SPS-)Steuerung in Echtzeit zugeführt werden. Dadurch kann eine erhebliche Automatisierung des Betriebs eines hier betroffenen Lagerplatzes erreicht werden.

Die erfindungsgemäß ebenfalls vorgeschlagene Einrichtung ist eingerichtet, eine hier betroffene Lagerplatzsteuerung oder eine mit einer Lagerplatzhaltung ausgestattete Materialgewinnungsanlage, insbesondere einen dort vorgesehenen Lagerbereich beziehungsweise eine entsprechende Halde, mittels des vorgeschlagenen Verfahrens weitestgehend automatisiert und dennoch materialschonend zu betreiben.

Gemäß einem ersten Aspekt weist die vorgeschlagene Einrichtung eine Sensorik zur bevorzugt berührungslosen Erfassung von topografischen Daten der jeweiligen Halde, insbesondere von deren aktuellen Oberflächendaten, und/oder zur Erfassung von physikalischen Daten der jeweiligen Halde, insbesondere von deren Temperaturdaten, auf. Zusätzlich weist die Einrichtung eine Datenverarbeitungseinheit auf, mittels der, auf der Grundlage der sensorisch erfassten Oberflächendaten und/oder physikalischen Daten, ein aktuelles Haldenmodell berechnet wird. Die Ergebnisse der Berechnungen anhand des Haldenmodells werden von der Einrichtung einer Steuerungseinheit der jeweiligen Lagerplatzanlage beziehungsweise Materialgewinnungsanlage zugeführt.

Gemäß einem weiteren Aspekt der vorgeschlagenen Einrichtung ist vorgesehen, dass die Datenverarbeitungseinheit eingerichtet ist, aktuelle physikalische und/oder chemische Zustandsgrößen der Halde anhand des digitalen Haldenmodells sowie der sensorisch erfassten Daten zu berechnen, aktuelle physikalische beziehungsweise chemische Zuständen des in der Halde gelagerten Materials anhand der berechneten Zustandsgrößen zu berechnen sowie eine Vorhersage von möglichen Materialveränderungen des gelagerten Materials anhand der berechneten physikalischen beziehungsweise chemischen Zustände zu treffen beziehungsweise entsprechende Vorhersagedaten bereitzustellen.

Gemäß einem weiteren Aspekt der vorgeschlagenen Einrichtung ist vorgesehen, dass die Steuerungseinheit eingerichtet ist, anhand der von der Datenverarbeitungseinheit gelieferten Vorhersagedaten (eine) geeignete Maßnahme(n) zur Verhinderung einer Materialänderung beziehungsweise Materialverschlechterung zu berechnen und die so berechneten Gegenmaßnahmendaten zum Beispiel einer SPS-Steuerung oder Maschinensteuerung zur Lagerhaltung zuzuführen, mittels der die Gegenmaßnahmen bei der Lagerhaltung durchgeführt werden.

Gemäß einem noch weiteren Aspekt der vorgeschlagenen Einrichtung ist vorgesehen, dass die Steuerungseinheit eingerichtet ist, wenigstens eine geeignete Maßnahme anhand von vorgegebenen, möglichen Maßnahmen durchzuführen, wobei für bestimmte physikalische beziehungsweise chemische Zustände geeignete Gegenmaßnahmen im Vorfeld anhand von Testversuchen ermittelt werden.

Die Erfindung kann insbesondere im Bereich von zum Beispiel an Schiffshäfen vorgesehenen Materialumschlagplätzen zum Umschlagen von Schüttgut (zum Beispiel Erz, Kohle, Braunkohle, Düngemittel, oder Salzen wie Kaliumkarbonat) sowie im Bereich einer entsprechenden Materialgewinnung solchen Schüttguts, zum Beispiel bei einer im Tagebau betriebenen Minenanlage oder in einer Lagereinrichtung für Schüttgüter der Zementproduktion, mit den hierin beschriebenen Vorteilen zur Anwendung kommen. Das Verfahren und die Einrichtung können allerdings auch bei anderweitig vorgesehenen Lagerplätzen, zum Beispiel bei Lagerplätzen zur Lagerung von Stein-/Natursteingut, entsprechend eingesetzt werden.

Ein Computerprogramm, nicht unter den Schutzumfang der Ansprüche fallend, ist eingerichtet, jeden Schritt des Verfahrens durchzuführen, insbesondere wenn es auf einem Steuergerät zur Steuerung der Lagerhaltung eines hier betroffenen Lagerbereichs beziehungsweise Lagerplatzes abläuft. Es ermöglicht insbesondere die Implementierung des erfindungsgemäßen Verfahrens auf einem elektronischen Steuergerät, zum Beispiel einem SPS-Steuergerät, ohne an dem Steuergerät bauliche Veränderungen vornehmen zu müssen. Hierzu ist ein maschinenlesbarer Datenträger vorgesehen, auf welchem das Computerprogramm gespeichert ist. Durch Aufspielen des Computerprogramms auf eine Einrichtung beziehungsweise ein entsprechendes elektronisches Steuergerät wird die erfindungsgemäße Einrichtung erhalten, welche eingerichtet ist, um eine hier betroffene Lagerplatzsteuerungsanlage beziehungsweise ein entsprechendes Lager beziehungsweise Zwischenlager für Schüttgut beziehungsweise Abraum einer Materialgewinnungsanlage mittels des erfindungsgemäßen Verfahrens zu betreiben beziehungsweise zu steuern.

Weitere Vorteile und Ausgestaltungen der Erfindung ergeben sich aus der Beschreibung und den beiliegenden Zeichnungen. In den Zeichnungen sind identische oder funktional gleichwirkende Elemente beziehungsweise Merkmale mit übereinstimmenden Bezugszeichen versehen.

Figur 1     zeigt schematisch ein digitales Haldenmodell zur Illustration des erfindungsgemäßen Verfahrens und der Einrichtung.

Figur 2     zeigt ein erstes Ausführungsbeispiel des erfindungsgemäßen Verfahrens zur Berechnung eines physikalischen Haldenmodells anhand einer schematischen Darstellung einer lokalen Anordnung von Volumenelementen.

Figur 3     zeigt ein zweites Ausführungsbeispiel des erfindungsgemäßen Verfahrens beziehungsweise der Einrichtung anhand eines kombinierten Fluss-/Blockdiagramms.

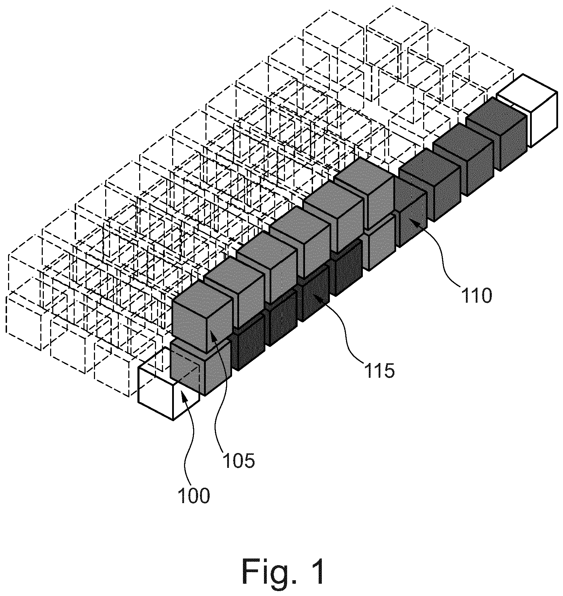

Das in Figur 1 gezeigte Haldenmodell betrifft die Zwischenlagerung von Kaliumkarbonat (sogenannte "Pottasche") in einer Halde. Bei der Lagerung von Kaliumkarbonat tritt unter bestimmten physischen Einflussfaktoren wie Druck, Temperatur, Luftfeuchte und/oder Lagerzeit eine Anbackung und/oder Verhärtung des Materials auf. Dieser oder ein ähnlicher Effekt kann unter Umständen auch bei anderen Materialien beobachtet werden.

Angebackenes Material hat zum Beispiel die folgenden nachteiligen Auswirkungen:

- Eine Verringerung der Materialqualität und somit Umsatzeinbußen für den Materialeigentümer;
- eine stärkere Abnutzung von Rücklademaschinen aufgrund von Zahnverschleiß;
- eine Verringerung der Effizienz der Lagerplatzeinrichtung und somit Umsatzeinbußen aufgrund einer verlangsamten Auslagerung sowie durch erforderliche, weitere Arbeitsschritte, um das angebackene Material wieder zu mahlen.

Gemäß dem in Figur 1 in einer isometrischen Draufsicht dargestellten Haldenmodell wird der jeweils betroffene Lagerplatz in ein digitales Lagerplatzmodell überführt, indem dieser in dem vorliegenden Ausführungsbeispiel in digitale, würfelförmige Volumenbereiche beziehungsweise Volumenkörper unterteilt wird. Die Größe dieser Bereiche bestimmt die Auflösung des digitalen Modells und kann je nach Anforderung variiert werden.

Jedem der Volumenbereiche können verschiedene, physikalische beziehungsweise chemische Zustandsgrößen (Parameter) zugeordnet werden. Diese Größen können sein:

- Der momentane, in dem Volumenbereich herrschende (mittlere) Druck;

- der Zeitpunkt der Einlagerung des betreffenden Materials in dem Volumenbereich zur Berechnung des seitdem vergangenen Lagerungszeitraums;

- die Außertemperatur in der Haldenumgebung zum Zeitpunkt der Einlagerung des betreffenden Materials;

- die in der Haldenumgebung herrschende Luftfeuchtigkeit zum Zeitpunkt der Einlagerung des betreffenden Materials;

- der genannte Druck in einem Volumenbereich, und zwar multipliziert mit dem seit dem genannten Zeitpunkt der Einlagerung vergangenen Lagerungszeitraum, um eine zeitabhängige Druckkennzahl zu erhalten;

- die Art des betreffenden Materials;

- Qualitätsinformationen über das betreffende Material, zum Beispiel die chemische Zusammensetzung und Reinheit oder die physikalische Feinheit der Materialpartikel);

- sowie weitere Einflussfaktoren beziehungsweise Einflussgrößen für die Lagerung des betreffenden Materials, zum Beispiel dessen Anbackungswahrscheinlichkeit, und zwar bevorzugt in Abhängigkeit genannter Zustandsgrößen.

Bei dem in Figur 1 dargestellten Haldenmodell liegen in den hier gezeigten Volumenbereichen 100 die folgenden Werte vorgenannter Zustandsgrößen und Materialeigenschaften vor:

- Zeitpunkt der Einlagerung des betreffenden Materials: 2019.04.10 / 12:35:24
- Lagerungszeitraum bis dato: 56:20:54 h
- Momentaner, durchschnittlicher Druck: 10.000 N
- Materialart: Pottasche
- Materialqualität: xyz
- Anbackungswahrscheinlichkeit: 50%

Die genannten Werte ergeben in dem vorliegenden Beispiel von Pottasche für die hellgrau schattierten acht Volumenbereiche beziehungsweise -elemente 105 eine (nicht zu vernachlässigende) Anbackungsgefahr, für die mittelgrau schattierten vier Volumenbereiche 110 eine Anbackungswahrscheinlichkeit von <30% und für die dunkelgrau schattierten vier Volumenbereiche 115 eine Anbackungswahrscheinlichkeit von >90%

Das entsprechend der Figur 1 somit vorliegende, digitale Haldenmodell wird in dem vorliegenden Ausführungsbeispiel mittels bilderfassender Sensoren, zum Beispiel Laser, Radar, photogrammetrische Sensoren, oder dergleichen, erstellt, welche bevorzugt an einem (Band-)Absetzer und/oder an einem Rückladegerät der jeweiligen Lagerhaltungseinrichtung angeordnet sind.

Beim Einlagern des Materials werden die zu diesem Zeitpunkt verfügbaren Parameter, in dem vorliegenden Ausführungsbeispiel das eingelagerte Material, der Einlagerungszeitpunkt, die bei der Einlagerung herrschende Luftfeuchtigkeit, etc. dem zu diesem Zeitpunkt jeweils befüllten Volumenbereich zugeordnet. Auf Basis dieser Zustandsgrößen beziehungsweise Parameter berechnet ein materialspezifischer Algorithmus die Wahrscheinlichkeit von Zuständen des Materials in den jeweiligen, vorliegend würfelförmigen Volumenbereichen in dem vorliegenden Ausführungsbeispiel gemäß der folgenden Beziehung:

$$Materialzustand(t) = \sum_{i=1}^{n}\left\{w_i * \sum_{j=0}^{\tau}\{v_i * X_i * (t - t_j)\}\right\}$$

in der die Größe t den Zeitpunkt des Materialzustandes, die Größe $X_i$ eine materialbezogene Zustandsgröße $X_i$ die Größe $w_i$ einen Gewichtungsfaktor für die Zustandsgröße $X_i$, die Größe $v_i$ einen Gewichtungsfaktor für Zeitabhängigkeit der Zustandsgröße $X_i$, und die Größe $\tau_i$ die Anzahl der zeitlich zurückliegenden beziehungsweise historischen Zeitschritte, die für die Zustandsgröße $X_i$ betrachtet werden, bedeuten.

Beispiel für die Zustandsberechnung:

In dem Beispiel wird als Material beziehungsweise Lagergut Kaliumkarbonat (Pottasche) zugrunde gelegt, von dem angenommen wird, dass es nach x Stunden Lagerzeit unter einem Druck y zu 90% anbackt. Der vorgenannte Algorithmus wird auf der Grundlage entsprechender Vorversuche und/oder den dabei gewonnenen physikalischen beziehungsweise chemischen Zusammenhängen gebildet beziehungsweise angepasst. Der Algorithmus ermöglicht damit eine Bewertung von Wahrscheinlichkeiten beziehungsweise Vorhersage von hier betroffenen, lagerungsbedingten Zuständen, zum Beispiel genannter Anbackungszustände, die das Material in genannten Volumenbereichen annimmt.

Die Anlagensteuerung kann nun auf Basis der so berechneten Wahrscheinlichkeiten beziehungsweise Vorhersagen so eingerichtet beziehungsweise programmiert werden, dass die Wahrscheinlichkeit, dass ein bestimmter, ungewünschter (lagerungsbedingter) Materialzustand eintritt, verringert wird.

Mögliche Maßnahmen im Betrieb einer hier betroffenen Lagerungseinrichtung zur Verringerung der Eintrittswahrscheinlichkeiten bestimmter Materialzustände können sein:

- Eine rechtzeitige Auslagerung des Materials, d.h. eine entsprechende Verringerung der Einlagerungszeit;

- eine geringere Aufhaldung von Material und damit eine geringere Höhe einer Halde an kritischen Stellen, wodurch sich der Druck auf ein beziehungsweise in einem beschriebenen Volumenelement verringert;

- Einlagerung neuen Materials nur an entsprechend unkritischen Stellen, ebenfalls zur Verringerung des genannten Drucks.

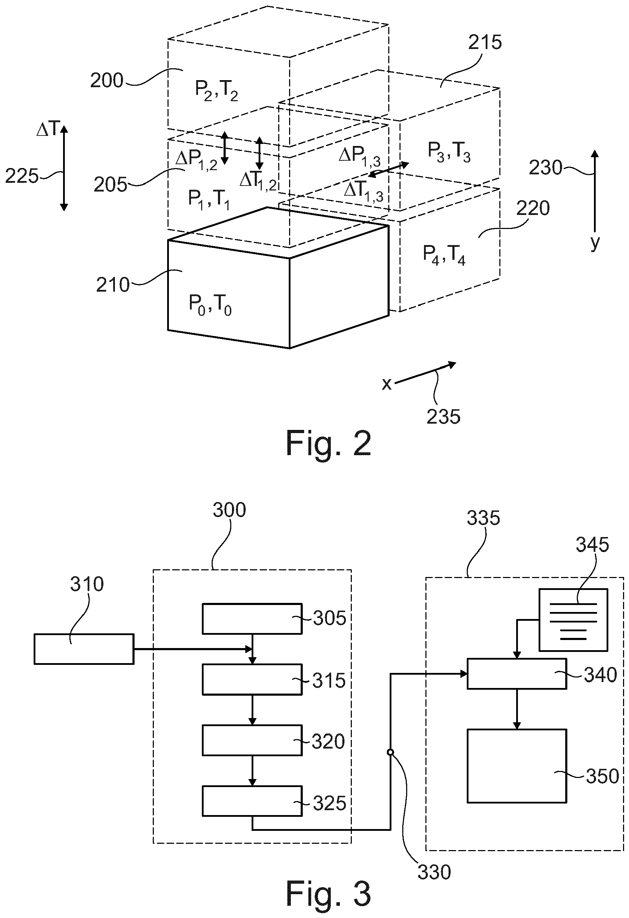

In der Figur 2 ist eine schematische Darstellung einer lokalen Anordnung von beschriebenen Volumenelementen, und zwar zu Vereinfachungszwecken von nur fünf aneinandergrenzenden Volumenelementen 200 - 220, gezeigt. Anhand dieser Darstellung wird ein erstes Ausführungsbeispiel des erfindungsgemäßen Verfahrens zur Berechnung eines hier betroffenen, physikalischen Haldenmodells anhand eines genannten Algorithmus' beschrieben.

Der nur für die beiden Volumenelemente 200, 205 gezeigte Druckgradient $\Delta p_{1,2}$ in vertikaler Richtung der gezeigten Anordnung wird im Wesentlichen bestimmt durch die gravitationsbedingte Druckausübung des oberen Volumenelements 200 auf das darunterliegende Volumenelement 205. Der Druckgradient zwischen den beiden unteren Volumenelementen 205, 210 ergibt sich dann entsprechend, wobei allerdings die gesamte Druckbelastung der beiden Volumenelemente 200, 205 auf das darunterliegende Volumenelement 210 zu berücksichtigen ist.

Der ebenfalls nur für die beiden Volumenelemente 200, 205 gezeigte Temperaturgradient $\Delta T_{1,2}$ in vertikaler Richtung der gezeigten Anordnung wird im Wesentlichen bestimmt durch äußere Einflüsse wie die Sonneneinstrahlung und die Bodentemperatur sowie die daraus über die Haldenhöhe (in der y-Richtung 230) sich ergebende Temperaturdifferenz $\Delta T$ 225. Der Temperaturgradient zwischen den beiden unteren Volumenelementen 205, 210 ergibt sich dann entsprechend.

Aus genannten Druck- und Temperaturgradienten können die in den drei Volumenelementen 200 - 210 herrschenden mittleren Drücke und mittleren Temperaturen abgeleitet werden.

Aus diesen Daten kann, für das jeweils vorliegende Material spezifisch, die lagerungsbedingten physikalischen beziehungsweise chemischen Materialveränderungen ermittelt werden. In dem vorliegenden Ausführungsbeispiel erfolgt diese Ermittlung anhand von in Testversuchen für das jeweilige Material gewonnenen Daten, welche zum Beispiel in Form von (elektronischen) Tabellen oder Datenbanken vorliegen.

Der nur für die beiden Volumenelemente 205, 215 gezeigte Druckgradient $\Delta p_{1,3}$ in horizontaler Richtung der gezeigten Anordnung wird im Wesentlichen bestimmt durch horizontale Druckbelastungskomponenten zwischen horizontal benachbarten Volumenelementen, welche durch die bei einer Schüttung von kornförmigem Material mögliche seitliche Bewegung einzelner Materialpartikel verursacht werden.

Der ebenfalls nur für die beiden Volumenelemente 205, 215 gezeigte Temperaturgradient $\Delta T_{1,3}$ in horizontaler Richtung der gezeigten Anordnung wird im Wesentlichen bestimmt durch den Temperaturverlauf entlang der Halde, und zwar in dem vorliegenden Beispiel entlang der gezeigten x-Richtung 235.

In der Figur 3 ist ein zweites Ausführungsbeispiel des erfindungsgemäßen Verfahrens beziehungsweise der Einrichtung anhand eines kombinierten Block-/Flussdiagramms dargestellt.

Eine Datenverarbeitungseinheit 300 berechnet im Block beziehungsweise Schritt 305 ein beschriebenes, digitales Haldenmodell auf der Grundlage von sensorisch 310 erfassten aktuellen physikalischen und/oder chemischen Daten. Diese Daten umfassen in dem vorliegenden Ausführungsbeispiel sowohl geometrischen Daten beziehungsweise entsprechende Oberflächendaten einer betreffenden Halde, in der Umgebung der Halde und/oder innerhalb der Halde sensorisch erfasste Temperaturdaten sowie materialspezifische Daten bezüglich des momentan in der Halde gelagerten Materials. Anhand dieser Daten wird ein aktuelles beziehungsweise momentan gültiges Haldenmodell berechnet 305.

Die Datenverarbeitungseinheit 300 berechnet 315 anhand des digitalen Haldenmodells 305 sowie der sensorisch erfassten Daten 310 aktuelle physikalische und/oder chemische Zustandsgrößen der Halde. Anhand dieser berechneten Zustandsgrößen werden aktuelle physikalische beziehungsweise chemische Zustände des in der Halde gelagerten Materials berechnet 320 und anhand der so berechneten physikalischen beziehungsweise chemischen Zustände eine Vorhersage zu möglichen Materialveränderungen des gelagerten Materials getroffen 325 beziehungsweise entsprechender Vorhersagedaten bereitgestellt 330. Zur Vorhersage kann dabei die Wahrscheinlichkeit für die Entstehung von physikalischen Zuständen, welche bei der Lagerung des jeweils eingelagerten Materials auftreten können, berechnet werden 325, 330.

Die so bereitgestellten 330 Vorhersagedaten werden einer Steuerungseinheit 335 der jeweiligen Lagerplatzanlage beziehungsweise Materialgewinnungsanlage zugeführt. Anhand der vorliegenden Vorhersagedaten 330 werden in dem vorliegenden Ausführungsbeispiel in der Steuereinheit 335 eine oder mehrere geeignete Gegenmaßnahmen zur Verhinderung einer Materialänderung berechnet 340 und die dabei sich ergebenden Daten vorliegend einer SPS-Steuerung 350 zuführt, mittels der die berechneten 340 Gegenmaßnahmen beim Haldenbetrieb der hier betroffenen Lagereinrichtung durchgeführt werden.

Es ist anzumerken, dass die Berechnung der geeigneten Gegenmaßnahme(n) in dem vorliegenden Ausführungsbeispiel anhand eines vorgegebenen Katalogs beziehungsweise einer entsprechenden Auswahl 345 möglicher Gegenmaßnahmen durchführt wird, wobei für bestimmte physikalische beziehungsweise chemische Zustände geeignete Gegenmaßnahmen im Vorfeld anhand von Testmessungen beziehungsweise -versuchen ermittelt werden.

Es ist ferner anzumerken, dass ein vorbeschriebenes Verfahren sowie eine vorbeschriebene Einrichtung zum Beispiel bei einem an einer Materialgewinnungsanlage (Erzabbau, Kohleabbau, Kaliabbau, etc.) vorgesehenen Materialzwischenlager oder an einem Schiffshafen vorgesehenen Materialumschlagplatz zum Umschlagen von entsprechendem Schüttgut einsetzbar sind.

**Patentansprüche**

1. Verfahren zum Betreiben einer Anlage zur Lagerung von Schüttgut mit wenigstens einem haldenförmigen Lagerbereich, insbesondere einer Anlage zum Materialumschlag von Schüttgut oder einer Materialgewinnungsanlage, wobei für den wenigstens einen Lagerbereich ein digitales Haldenmodell erstellt wird (305) und dass auf der Grundlage des erstellten Haldenmodells die Entstehung von physikalischen und/oder chemischen Zuständen, welche bei der Lagerung des jeweils eingelagerten Materials auftreten können, vorhergesagt wird (320, 325), und dass vorhergesagte physikalische beziehungsweise chemische Zustände beim Lagerungsbetrieb herangezogen werden (340), um eine materialschonende Lagerung des eingelagerten Materials zu gewährleisten, **dadurch gekennzeichnet, dass** eine materialschonende Lagerung verhindert, dass das Schüttgut während der Lagerung durch Verhärtungen oder Anbackungen vor dem erneuten Entnehmen wieder aufgebrochen werden muss, wobei bei der Erstellung (305) des digitalen Haldenmodells ein haldenförmiger Lagerbereich in eine Vielzahl von kleineren Volumenelementen (100 - 115, 200 - 220) zerlegt wird und dass die auf ein einzelnes Volumenelement einwirkenden physikalischen Kräfte und/oder chemischen Einflüsse berechnet werden, wobei bei der Berechnung der Volumenelemente (100 - 115, 200 - 220) des Haldenmodells der in einem Volumenelement (210) lokal vorherrschende Druck und/oder die in diesem Volumenelement (210) vorliegende Temperatur und/oder die in diesem Volumenelement (210) vorherrschende Luftfeuchte beziehungsweise Materialfeuchte berücksichtigt werden, um aus diesen Größen zu berechnen, wie wahrscheinlich eine Verhärtung des Materials des jeweils betrachteten Volumenelements (210) und/oder eine Anbackung des Materials dieses Volumenelements mit dem Material eines der Nachbarelemente (205, 220) ist.

2. Verfahren nach Anspruch 1, **dadurch gekennzeichnet, dass** auf der Grundlage des Haldenmodells die Wahrscheinlichkeit für die Entstehung der physikalischen Zuständen, welche bei der Lagerung des jeweils eingelagerten Materials auftreten können, berechnet wird (325).

3. Verfahren nach Anspruch 1 oder 2, **dadurch gekennzeichnet, dass** die materialschonende Lagerung des eingelagerten Materials durch vorgegebene Maßnahmen beziehungsweise Gegenmaßnahmen (340) im Lagerungsbetrieb gewährleistet wird.

4. Verfahren nach einem der vorhergehenden Ansprüche, **dadurch gekennzeichnet, dass** für ein vorgegebenes Volumenelement (100 - 115, 200 - 220) die physikalischen Kräfte und/oder chemischen Einflüsse von darüber angeordneten (200, 205) und von seitlich angeordneten (215, 220) Nachbarelementen berücksichtigt werden.

5. Verfahren nach Anspruch 4, **dadurch gekennzeichnet, dass** die zu berücksichtigende Anzahl nächster Nachbarelemente horizontal nur nächste Nachbarn (215, 220) und vertikal möglichst sämtliche, oberhalb des betrachteten Volumenelementes angeordnete Volumenelemente (200, 205) umfasst.

6. Verfahren nach einem der vorhergehenden Ansprüche, **dadurch gekennzeichnet, dass** bei der Berechnung der Volumenelemente (100 - 115, 200 - 220) des Haldenmodells in einem Volumenelement (210) vorliegende, für eine Verhärtung und/oder Anbackung des Materials relevante, materialabhängige physikalische beziehungsweise chemische Einflussgrößen berücksichtigt werden.

7. Verfahren nach einem der vorhergehenden Ansprüche, **dadurch gekennzeichnet, dass** im Vorfeld empirisch ermittelte Daten für das Verhärtungs- und/oder Anbackungsverhalten verschiedener Materialien zugrunde gelegt werden, wobei die im Vorfeld ermittelten Daten für ein vorgegebenes Material die Verhärtungs- beziehungsweise Anbackungswahrscheinlichkeit in Abhängigkeit von dem an der Grenzfläche zwischen zwei Volumenelementen (100 - 115, 200 - 220) vorliegenden Druck und der Temperatur umfassen.

8. Verfahren nach einem der vorhergehenden Ansprüche, **dadurch gekennzeichnet, dass** bei der Berechnung der Volumenelemente (100 - 115, 200 - 220) des Haldenmodells zusätzlich die bereits abgelaufene Lagerungszeit des jeweiligen Materials berücksichtigt wird.

9. Verfahren nach einem der vorhergehenden Ansprüche, **dadurch gekennzeichnet, dass** für die Berechnung (305) des Haldenmodells erforderliche räumliche Daten einer aktuell vorliegenden haldenförmigen Materialaufschüttung mit an der Materialaufschüttung sensorisch erfassten, topografischen Daten verglichen werden und anhand des Vergleichs ggf. eine Anpassung des Haldenmodells an die aktuelle Materialaufschüttung vorgenommen wird.

10. Verfahren nach einem der vorhergehenden Ansprüche, **dadurch gekennzeichnet, dass** die Ergebnisse der Berechnung des digitalen Haldenmodells beziehungsweise die entsprechenden Maßnahmen einer Maschinensteuerung zum Betrieb einer an der jeweiligen Lagerplatzanlage beziehungsweise Materialgewinnungsanlage vorgesehenen Transport- und/oder Fördertechnik für Schüttgut in Echtzeit zugeführt werden.

11. Einrichtung, welche eingerichtet ist, eine Anlage zur Lagerung von Schüttgut mit wenigstens einem haldenförmigen Lagerbereich, insbesondere eine Anlage zum Materialumschlag von Schüttgut oder eine Materialgewinnungsanlage, anhand des Verfahrens gemäß einem der Ansprüche 1 bis 10 zu steuern, wobei durch eine Datenverarbeitungseinheit, mittels der, auf der Grundlage von sensorisch (310) erfassten Oberflächendaten und/oder physikalischen Daten, ein aktuelles Haldenmodell (305) berechnet wird, wobei die Ergebnisse der Berechnungen anhand des Haldenmodells einer Steuerungseinheit (335) der jeweiligen Lagerplatzanlage beziehungsweise Materialgewinnungsanlage zugeführt werden.

12. Einrichtung nach Anspruch 11, **gekennzeichnet durch** eine Sensorik (310) zur Erfassung von topografischen Daten der Halde, insbesondere von deren aktuellen Oberflächendaten, und/oder zur Erfassung von physikalischen Daten der jeweiligen Halde, insbesondere von deren Temperaturdaten.

13. Einrichtung nach einem der Ansprüche 11 bis 12, **dadurch gekennzeichnet, dass** die Datenverarbeitungseinheit eingerichtet ist, aktuelle physikalische und/oder chemische Zustandsgrößen einer haldenförmigen Materialaufschüttung anhand des digitalen Haldenmodells (305) sowie der sensorisch (310) erfassten Daten zu berechnen (320), anhand der so berechneten Zustandsgrößen aktuelle physikalische beziehungsweise chemische Zustände des in der Halde gelagerten Materials zu berechnen sowie eine Vorhersage von möglichen Materialveränderungen des gelagerten Materials anhand der berechneten physikalischen beziehungsweise chemischen Zustände zu treffen (325) beziehungsweise entsprechende Vorhersagedaten bereitzustellen.

## Claims

1. Method for operating a plant for storing bulk material, having at least one stockpile-like storage region, in particular a plant for material handling of bulk material or a material extraction plant, wherein a digital stockpile model is compiled (305) for the at least one storage region and that the occurrence of physical and/or chemical states that may arise during the storage of the respectively stored material is predicted (320, 325) on the basis of the compiled stockpile model, and that predicted physical respectively chemical states are used (340) during storage operation in order to ensure material-friendly storage of the stored material, **characterized in that** material-friendly storage prevents the bulk material having to be broken up again during storage before being taken out again because of hardening or caking, during the compilation (305) of the digital stockpile model, a stockpile-like storage region being decomposed into a multiplicity of smaller volume elements (100 - 115, 200 - 220), and **in that** the physical forces and/or chemical influences acting on an individual volume element are calculated, the pressure locally prevailing in a volume element (210) and/or the temperature existing in this volume element (210) and/or the air humidity respectively material moisture content prevailing in this volume element (210) being taken into account in the calculation of the volume elements (100 - 115, 200 - 220) of the stockpile model, in order to calculate from these factors how probable hardening of the material of the respectively considered volume element (210) is and/or how probable caking of the material of this volume element with the material of one of the neighboring elements (205, 220) is.

2. Method according to Claim 1, **characterized in that** the probability of the occurrence of the physical states that may arise during the storage of the respectively stored material is calculated (325) on the basis of the stockpile model.

3. Method according to Claim 1 or 2, **characterized in that** the material-friendly storage of the stored material is ensured by predetermined measures respectively countermeasures (340) during the storage operation.

4. Method according to one of the preceding claims, **characterized in that** for a predetermined volume element (100 - 115, 200 - 220), the physical forces and/or chemical influences of neighboring elements (200, 205) arranged above and neighboring elements (215, 220) arranged laterally are taken into account.

5. Method according to Claim 4, **characterized in that** the number of nearest neighboring elements to be taken into account horizontally comprises only nearest neighbors (215, 220), and vertically comprises as many as possible of the volume elements (200, 205) arranged above the volume element considered.

6. Method according to one of the preceding claims, **characterized in that** material-dependent physical respectively chemical influencing factors that are present in a volume element (210) and that are relevant for hardening and/or caking of the material are taken into account in the calculation of the volume elements (100 - 115, 200 - 220) of the stockpile model.

7. Method according to one of the preceding claims, **characterized in that** data empirically determined in advance for the hardening and/or caking behavior of different materials are used as a basis, wherein the data determined in advance for a predetermined material comprise the hardening respectively caking probability as a function of the pressure existing at the interface between two volume elements (100 - 115, 200 - 220) and the temperature.

8. Method according to one of the preceding claims, **characterized in that** the storage time of the respective material which has already elapsed is additionally taken into account in the calculation of the volume elements (100 - 115, 200 - 220) of the stockpile model.

9. Method according to one of the preceding claims, **characterized in that** spatial data, required for the calculation (305) of the stockpile model, of a currently existing stockpile-like material mound are compared with topographical data recorded on the material mound by sensors, and adaptation of the stockpile model to the current material mound is optionally carried out by means of the comparison.

10. Method according to one of the preceding claims, **characterized in that** the results of the calculation of the digital stockpile model respectively the corresponding measures are supplied in real time to a machine controller for operating a bulk material transport and/or conveyor technology, provided at the respective stockyard plant respectively material extraction plant.

11. Device which is configured to control a plant for storing bulk material, having at least one stockpile-like storage region, in particular a plant for material transloading of bulk material or a material extraction plant, by means of the method according to one of Claims 1 to 10, wherein a current stockpile model (305) is calculated by a data processing unit, by means of the, on the basis of surface data and/or physical data recorded by sensors (310), wherein the results of the calculations by means of the stockpile model are supplied to a control unit (335) of the respective stockyard plant respectively material extraction plant.

**12.** Device according to Claim 11, **characterized by** sensors (310) for recording topographical data of the stockpile, in particular the current surface data thereof, and/or for recording physical data of the respective stockpile, in particular the temperature data thereof.

**13.** Device according to one of Claims 11 to 12, **characterized in that** the data processing unit is configured to calculate (320) current physical and/or chemical state variables of a stockpile-like material mound by means of the digital stockpile model (305) and the data recorded by sensors (310), to calculate current physical respectively chemical states of the material stored in the stockpile by means of the state variables calculated in this way, and to make (325) a prediction of possible material modifications of the stored material by means of the calculated physical respectively chemical states, respectively to provide corresponding prediction data.

**Revendications**

**1.** Procédé de fonctionnement d'une installation de stockage de produit en vrac, présentant au moins une zone de stockage en forme de terril, en particulier une installation de manutention de produit en vrac ou une installation de récupération de matière, un modèle numérique de terril étant établi (305) pour ladite au moins une zone de stockage et, sur la base du modèle de terril établi, la formation d'états physiques et/ou chimiques, qui peuvent survenir lors du stockage de la matière à chaque fois entreposée, étant prédite (320, 325) et les états physiques ou, selon le cas, chimiques prédits étant utilisés lors du fonctionnement du stockage (340) pour garantir un stockage respectueux de la matière entreposée, **caractérisé en ce qu'**un stockage respectueux de la matière empêche que le produit en vrac doive de nouveau être concassé pendant le stockage, en raison de durcissements ou d'agglomérations, avant le nouveau prélèvement, où, lors de l'établissement (305) du modèle numérique de terril, une zone de stockage en forme de terril est divisée en une multitude d'éléments volumiques plus petits (100-115, 200-220) et **en ce que** les forces physiques et/ou les influences chimiques agissant sur un seul élément volumique sont calculées, où, lors du calcul des éléments volumiques (100-115, 200-220) du modèle de terril, la pression qui règne localement dans un élément volumique (210) et/ou la température qui existe dans cet élément volumique (210) et/ou l'humidité de l'air ou, selon le cas, l'humidité de la matière qui règne dans cet élément volumique (210) est/sont prise(s) en considération pour calculer, à partir de ces grandeurs, la probabilité d'un durcissement de la matière de l'élément volumique (210) à chaque fois pris en considération et/ou d'une agglomération de la matière de cet élément volumique avec la matière d'un des éléments adjacents (205, 220).

**2.** Procédé selon la revendication 1, **caractérisé en ce que**, sur la base du modèle de terril, la probabilité de la formation des états physiques qui peuvent survenir lors du stockage de la matière à chaque fois entreposée est calculée (325).

**3.** Procédé selon la revendication 1 ou 2, **caractérisé en ce que** le stockage respectueux de la matière entreposée est garanti par des mesures ou, selon le cas, des contre-mesures (340) spécifiées lors du fonctionnement du stockage.

**4.** Procédé selon l'une des revendications précédentes, **caractérisé en ce que**, pour un élément volumique spécifié (100-115, 200-220), les forces physiques et/ou les influences chimiques d'éléments adjacents agencés au-dessus (200, 205) et agencés latéralement (215, 220) par rapport audit élément volumique sont prises en considération.

**5.** Procédé selon la revendication 4, **caractérisé en ce que** le nombre d'éléments adjacents les plus proches à prendre en considération comprend, horizontalement, uniquement les voisins les plus proches (215, 220) et, verticalement, si possible l'ensemble des éléments volumiques (200, 205) agencés au-dessus de l'élément volumique pris en considération.

**6.** Procédé selon l'une des revendications précédentes, **caractérisé en ce que**, lors du calcul des éléments volumiques (100-115, 200-220) du modèle de terril, les grandeurs d'influence physiques ou, selon le cas, chimiques qui existent dans un élément volumique (210), pertinentes pour un durcissement et/ou une agglomération de la matière, dépendant de la matière, sont prises en considération.

**7.** Procédé selon l'une des revendications précédentes, **caractérisé en ce que** des données déterminées au préalable de manière empirique pour le comportement de durcissement et/ou d'agglomération de différentes matières servent de base, les données déterminées au préalable pour une matière spécifiée comprenant la probabilité de durcissement ou, selon le cas, d'agglomération en fonction de la température et de la pression existant à l'interface entre deux éléments volumiques (100-115, 200-220).

8. Procédé selon l'une des revendications précédentes, **caractérisé en ce que**, lors du calcul des éléments volumiques (100-115, 200-220) du modèle de terril, le temps de stockage déjà écoulé de la matière respective est en outre pris en considération.

9. Procédé selon l'une des revendications précédentes, **caractérisé en ce que** des données spatiales nécessaires pour le calcul (305) du modèle de terril d'un entassement de matière en forme de terril qui existe actuellement sont comparées à des données topographiques déterminées par des capteurs sur l'entassement de matière et, à l'aide de la comparaison, une adaptation du modèle de terril à l'entassement de matière actuel est le cas échéant réalisée.

10. Procédé selon l'une des revendications précédentes, **caractérisé en ce que** les résultats du calcul du modèle numérique de terril ou, selon le cas, les mesures correspondantes sont introduites en temps réel dans une commande machine destinée au fonctionnement d'une technique de transport et/ou de convoyage pour un produit en vrac, prévue au niveau du site de stockage respectif ou, selon le cas, de l'installation de récupération de matière respective.

11. Dispositif conçu pour commander une installation de stockage de produit en vrac, présentant au moins une zone de stockage en forme de terril, en particulier une installation de manutention de matière en vrac ou une installation de récupération de matière, à l'aide du procédé selon l'une des revendications 1 à 10, une unité de traitement de données calculant, au moyen des données de surface et/ou des données physiques déterminées par des capteurs (310), un modèle de terril actuel (305), les résultats des calculs à l'aide du modèle de terril étant introduits dans une unité de commande (335) de l'installation de stockage respective ou, selon le cas, de l'installation de récupération de matière respective.

12. Dispositif selon la revendication 11, **caractérisé par** des capteurs (310) destinés à déterminer des données topographiques du terril, en particulier ses données de surface actuelles, et/ou à déterminer des données physiques du terril respectif, en particulier ses données de température.

13. Dispositif selon l'une des revendications 11 à 12, **caractérisé en ce que** l'unité de traitement de données est conçue pour calculer des grandeurs d'état physiques et/ou chimiques actuelles d'un entassement de matière en forme de terril à l'aide du modèle numérique de terril (305) ainsi que des données déterminées par des capteurs (310), pour calculer, à l'aide des grandeurs d'état ainsi calculées, des états physiques ou, selon le cas chimiques actuels de la matière stockée dans le terril ainsi que pour prédire (325) des modifications de matière éventuelles de la matière stockée à l'aide des états physiques ou, selon les cas chimiques calculés ou, selon le cas, pour mettre à disposition des données de prévision correspondantes.

Fig. 1

EP 4 100 341 B1

Fig. 2

Fig. 3

13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009075945 A1
- JP 2017138166 A
- CN 104634815 B
- DE 102015104229 A1

**In der Beschreibung aufgeführte Nicht-Patentliteratur**

- **PEUKER URS.** *Analyse und Strategien zum Verringern von Anbackungen bei der Lagerung von Mehrstoffsystemen insbesondere Glasgemenge in Rohstoffsilo,* 12. Dezember 2016, 1-116